# EUROPEAN PATENT SPECIFICATION

(11) **EP 1 830 352 B1**
(45) Date of publication and mention of the grant of the patent: **16.12.2009**
(21) Application number: 07000892.5
(22) Date of filing: 17.01.2007
(51) Int. Cl.: G11B 5/855

(54) **Patterned recording medium and production method therefor**
Mit Muster versehenes Aufzeichnungsmedium und Verfahren zu seiner Herstellung
Moyen d'enregistrement structuré et procédé de fabrication de celui-ci

(30) Priority: 01.03.2006 JP 2006054939
(43) Date of publication of application: 05.09.2007
(73) Proprietor: HITACHI, LTD., Chiyoda-ku Tokyo 100-8280 (JP)
(72) Inventor: Iwasaki, Tomio, Chiyoda-ku Tokyo 100-8220 (JP)
(74) Representative: Beetz & Partner

(56) References cited:
- JP-A- 8 263 839
- US-A1- 2002 135 939
- US-A1- 2003 072 971
- US-A1- 2005 086 795
- US-A1- 2005 185 561
- US-A1- 2005 186 356
- US-A1- 2005 186 357
- US-A1- 2005 199 581
- US-A1- 2005 243 467
- US-A1- 2006 019 124
- US-B1- 6 495 240

## Description

### BACKGROUND OF THE INVENTION

### 1. Field of the Invention .

The present invention relates to a patterned recording medium preferable for a magnetic disc memory device such as a hard disc device.

### 2. Description of the Related Art

Recently, the recording capacity of magnetic discs such as hard disc devices has been dramatically increased. This is owing to the dramatic increase of the areal density of the magnetic disc. As a technique for increasing the areal density of the magnetic disc, a patterned medium with a recording layer formed by a pattern comprising projecting portions and recessed portions has been disclosed (JP-A-2005-122876).

US 2005/0243467 A1 discloses, as non-magnetic materials for the recording layer of a recording medium, specifically SiO₂ (cf. [0043] of this document). In section [0072], other non-magnetic materials than SiO₂ are disclosed, which may be oxides other that SiO₂, nitrides such as TiN, carbides such as SiC and TiC, Ta, TaSi and Si. The main teaching of this prior art document is the provision of a recording layer formed in a concavo-convex pattern, the recording elements for recording information forming the convex portions thereof.

The problem underlying the teaching of US 2005/0243467 A1 consists in avoiding the formation of voids which may allow for entrance of moisture, air or the like when filling the spaces between the recording elements with the non-magnetic material.

Accordingly, the non-magnetic materials disclosed in this document serve to achieve chemical stability and to avoid corrosion by avoiding the formation of voids when filling the spaces between the magnetic portions with the non-magnetic material, in order to improve the recording and reproduction characteristics of the recording layer. This prior art document is silent regarding any definition of Young's moduli of the non-magnetic material and the magnetic material of the recording layer and their influence on deformation of the recording medium.

Although the patterned medium has the advantage of obtaining a high areal density, it is disadvantageous in that errors may be generated in recording and reproduction due to deformation of the projecting portions caused by collision of the lower end of the magnetic head with a projecting portion of the recording layer.

### SUMMARY OF THE INVENTION

An object of the present invention is to provide a highly reliable patterned recording medium without generating errors in recording and reproduction, methods for producting the patterned recording medium and a magnetic disc memory device using the same.

The above object is achieved according to the independent claims. The dependent claims relate to preferred embodiments.

The patterned recording medium of the invention comprises:
- a soft-magnetic layer
- a non-magnetic layer,
- an intermediate layer
   and
- a recording layer having a pattern structure of a non-magnetic material and a magnetic material formed successively on one principal plane side of a substrate;
it is characterized in that
- the Young's modulus En of the non-magnetic material of the recording layer is larger than the Young's modulus Em of the magnetic material of the recording layer,
   and
- the non-magnetic material contains one non-magnetic material selected from the group consisting of W, WN, WC, WB, WO, TaN, TaC and TaB as the main constituent material.

A first method for producing the patterned recording medium comprises the following steps:
- forming a soft-magnetic layer, a non-magnetic layer and an intermediate layer successively on one principal plane side of a substrate ,
- forming a layer of a non-magnetic material on the intermediate layer ,
- forming a pattern comprising projecting and recessed portions of the non-magnetic material by patterning the layer of the non-magnetic material, and
- forming a layer of a magnetic material so as to fill up the recessed portions of the pattern of the non-magnetic material ;
it is characterized in that
- the non-magnetic material and the magnetic material are selected such that the Young's modulus Eₙ of the non-magnetic material is larger than the Young's modulus Eₘ of the magnetic material , and
- the non-magnetic material contains one non-magnetic material selected from the group consisting of W, WN, WC, WB, WO, TaN, TaC and TaB as the main constituent material.

A second method for producing a patterned recording medium, comprising the following steps:
- forming a soft-magnetic layer, a non-magnetic layer and an intermediate layer successively on one principal plane side of a substrate ,
- forming a layer of a magnetic material on the intermediate layer ,
- forming a pattern comprising projecting and recessed portions of the magnetic material by patterning the layer of the magnetic material ,
   and
- forming a layer of a non-magnetic material so as to fill up the recessed portions of the pattern of the magnetic material ;
it is characterized in that
- the non-magnetic material and the magnetic material are selected such that the Young's modulus Eₙ of the non-magnetic material is larger than the Young's modulus Eₘ of the magnetic material , and
- the non-magnetic material contains one non-magnetic material selected from the group consisting of W, WN, WC, WB, WO, TaN, TaC and TaB as the main constituent material.

The magnetic disc memory device of the invention comprises a patterned recording medium, a driving part for rotating the patterned medium, a magnetic head for recording and reproduction with respect to the patterned medium driving means for driving the magnetic head and signal processing means for processing recording and reproduction signals from the magnetic head;
it is characterized in that the patterned recording medium is a recording medium according to the invention.

According to the present invention, a highly reliable patterned recording medium without generating errors in recording and reproduction can be provided.

### BRIEF DESCRIPTION OF THE DRAWINGS

FIG 1 is a diagram showing the structure of a first embodiment of the patterned recording medium of the present invention.
FIGS 2 to 5 are diagrams for explaining the process of a first embodiment of the production method for a patterned recording medium of the present invention.
FIGS 6 to 9 are diagrams for explaining the process of a second embodiment of the production method for a patterned recording medium of the present invention.
FIG 10 is a diagram showing the structure of the second embodiment of the patterned medium of the present invention.
FIG 11 is a diagram showing the structure of a third embodiment of the patterned recording medium of the present invention.
FIG. 12 is a graph showing results of calculation of the distortion of a patterned recording medium in the direction parallel to the substrate surface of the recording layer by molecular kinetic simulation.
FIG 13 is a diagram showing the configuration of a hard disc device using a patterned recording medium of the present invention.

### DESCRIPTION OF THE PREFERRED EMBODIMENTS

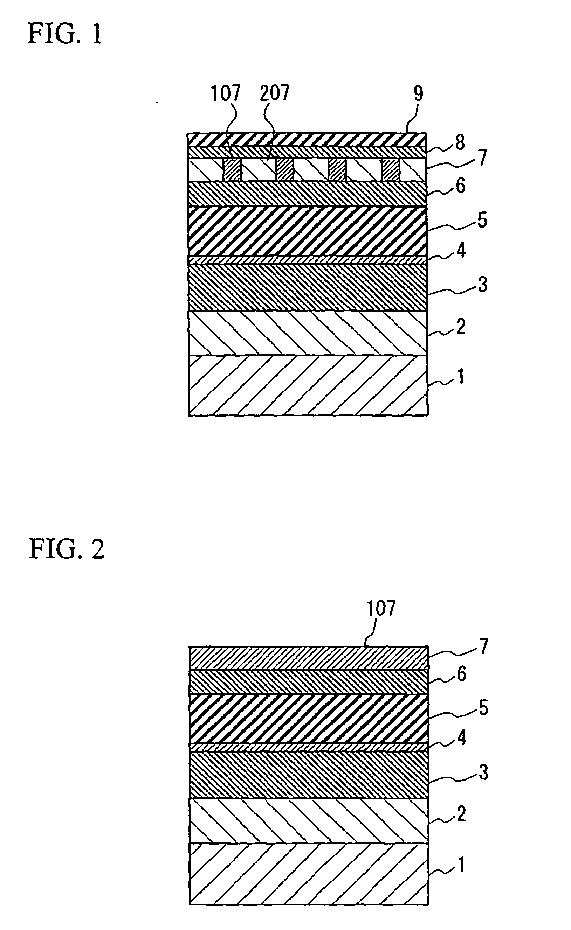

FIG 1 shows a first embodiment of a patterned recording medium of the present invention. The patterned recording medium of this embodiment comprises a substrate 1, a pre-coat layer 2 thereon, a soft-magnetic layer 3, a non-magnetic layer 4, a soft-magnetic layer 5, an intermediate layer 6, a recording layer 7, a protection layer 8 and a lubricant layer 9. The recording layer 7 has a pattern structure of a non-magnetic material 107 and a magnetic material 207. The pre-coat layer 2, the soft-magnetic layer 3, the non-magnetic layer 4, the soft-magnetic layer 5, the intermediate layer 6 and the recording layer 7 are made of a metal, and they are formed by for example a DC magnetron sputtering method. It is preferable that the soft-magnetic layers 3, 5 are made of an amorphous material. The intermediate layer 6 includes Ru as the principal constituent element, and it also contains Ti as an additional element in a concentration of 0.14 at% or more and 25 at% or less. The principal constituent element denotes the included element having the largest atomic percent concentration.

With reference to FIGS. 2 to 5, the production method for a patterned recording medium of the present invention, in particular, the method for forming the pattern structure of the recording layer 7 will be explained. First, as shown in FIG. 2, the pre-coat layer 2, the soft-magnetic layer 3, the non-magnetic layer 4, the soft-magnetic layer 5 and the intermediate layer 6 are formed on the substrate 1, and furthermore, the non-magnetic material layer 107 is formed thereon. The non-magnetic material layer 107 may be formed by for example a DC magnetron sputtering method. Since the method for forming the pre-coat layer 2, the soft-magnetic layer 3, the non-magnetic layer 4, the soft-magnetic layer 5 and the intermediate layer 6 on the substrate 1 is already known, it will not be described here.

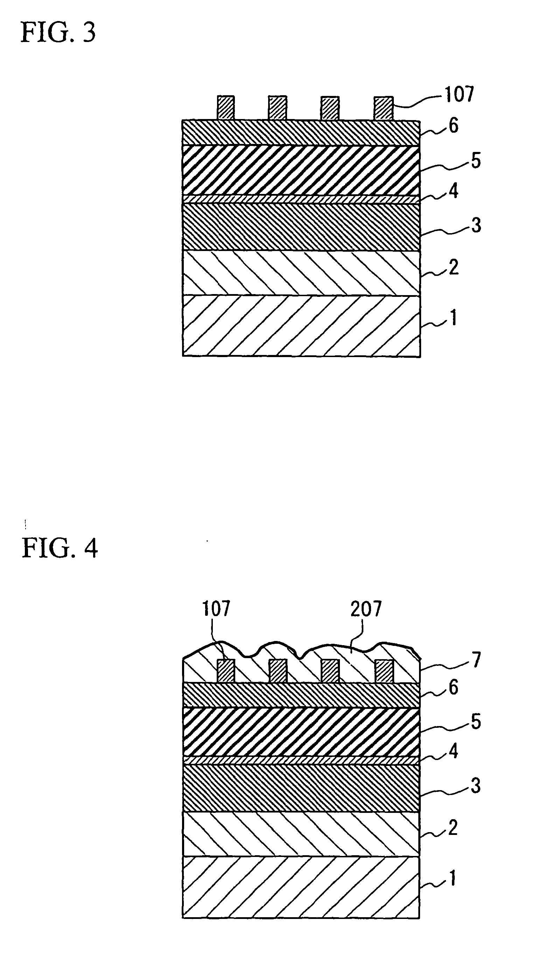

Next, as shown in FIG 3, the non-magnetic material layer 107 is patterned. That is, a pattern of the non-magnetic material layer 107 comprising projecting and recessed portions is formed. Since the thickness of the recessed portion of the non-magnetic material layer 107 is minute, in FIG 3, only the projecting portions are drawn without showing the recessed portions. The pattern may be formed by for example a nano-imprint method. The nano-imprint method is a method of patterning the non-magnetic material layer 107 by pressing a mold having a pattern of projections and recesses at high temperature against the non-magnetic material layer 107 and cooling down. Instead of using the nano-imprint method, dry etching or wet etching with a mask having a pattern may be utilized as well. Moreover, the pattern may be formed by self-organization.

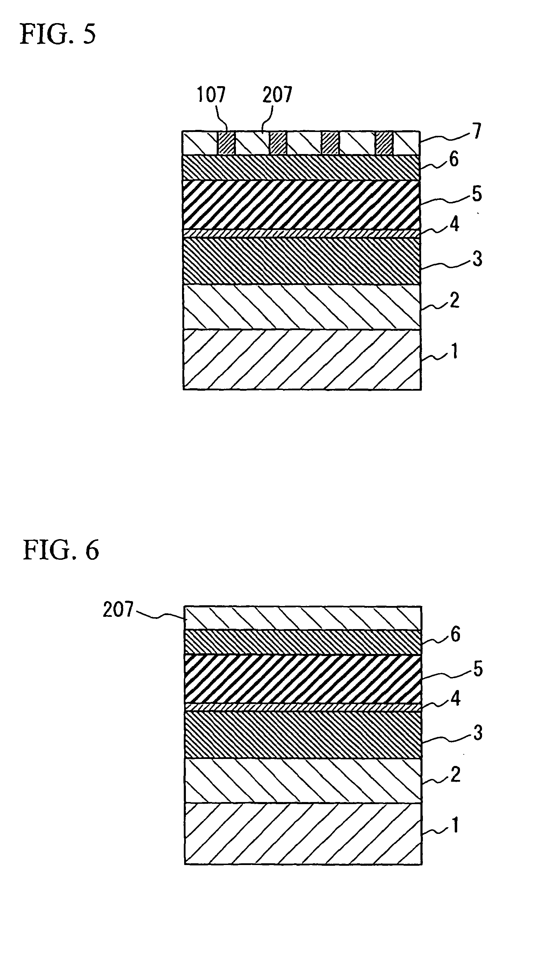

Next, as shown in FIG 4, the magnetic material layer 207 is formed so as to fill up the recessed portions of the pattern of the non-magnetic material layer 107. As shown in the figure, the magnetic material layer 207 may be formed so as to completely fill up the recessed portions of the non-magnetic material layer 107 and furthermore overflow the recessed portions. The magnetic material layer 207 is formed by for example a DC magnetron sputtering method. Next, as shown in FIG 5, the outer surface of the magnetic material layer 207 is flattened. The flattening operation is carried out by for example chemical-mechanical polishing (CMP). The flattening process may be omitted. Finally, as shown in FIG 1, the protection layer 8 and the lubricant layer 9 are formed. Since the method for forming the protection layer 8 and the lubricant layer 9 is already known, it will not be described here.

With reference to FIGS. 6 to 9, another embodiment of the method for forming the pattern structure of the recording layer 7 of a patterned recording medium of the present invention will be explained. First, as shown in FIG 6, the pre-coat layer 2, the soft-magnetic layer 3, the non-magnetic layer 4, the soft-magnetic layer 5 and the intermediate layer 6 are formed on the substrate 1, and furthermore, the magnetic material layer 207 is formed thereon. The magnetic material layer 207 may be formed by for example a DC magnetron sputtering method.

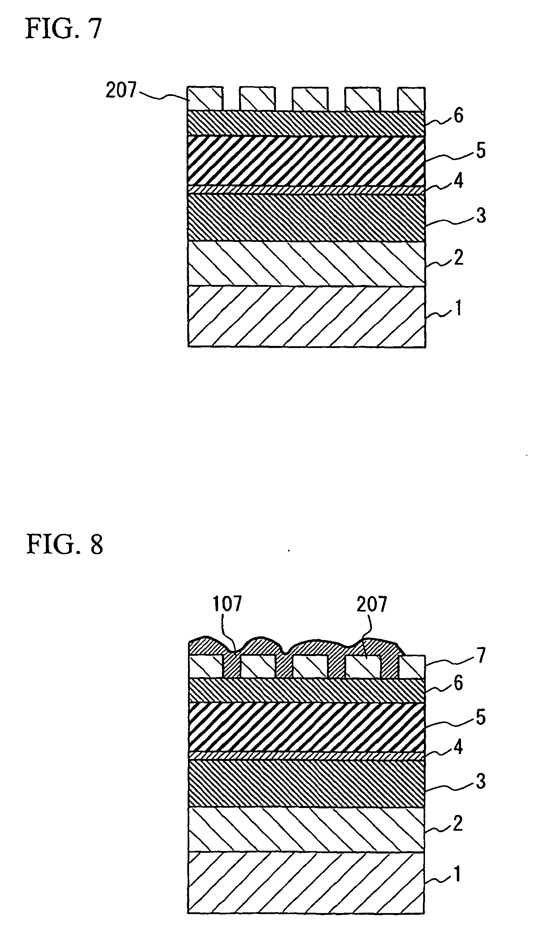

Next, as shown in FIG. 7, the magnetic material layer 207 is patterned. That is, a pattern of the magnetic material layer 207 comprising projecting and recessed portions is formed. Since the thickness of the recessed portions of the magnetic material layer 207 is minute, in FIG 7, only the projecting portions are drawn without showing the recessed portions. The pattern may be formed by for example a nano-imprint method.

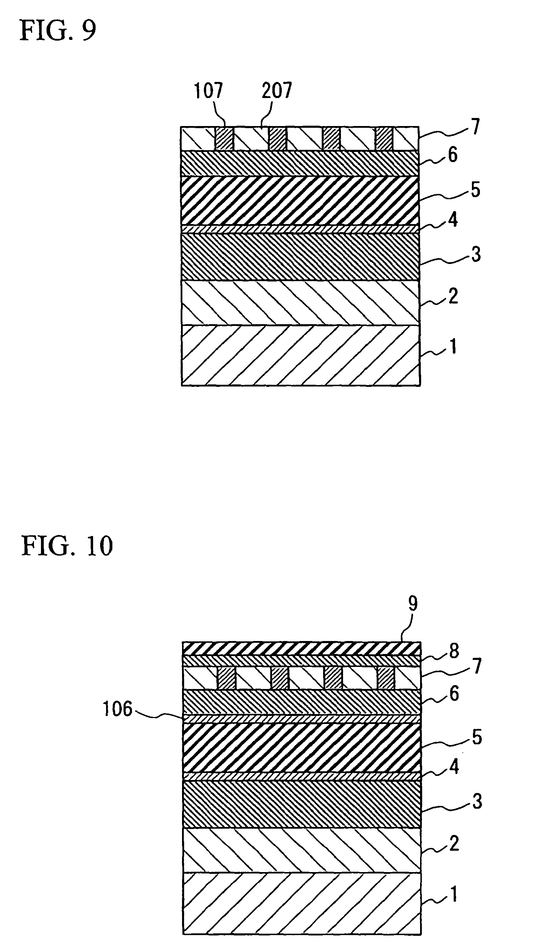

Next, as shown in FIG 8, the non-magnetic material layer 107 is formed so as to fill up the recessed portions of the pattern of the magnetic material layer 207. As shown in the figure, the non-magnetic material layer 107 may be formed so as to completely fill up the recessed portions of the magnetic material layer 207 and furthermore overflow the recessed portion. The non-magnetic material layer 107 is formed by for example a DC magnetron sputtering method. Next, as shown in FIG. 9, the outer surface of the non-magnetic material layer 107 is flattened. The flattening operation is carried out by for example chemical-mechanical polishing (CMP). The flattening process may be omitted. Finally, as shown in FIG. 1, the protection layer 8 and the lubricant layer 9 are formed. Since the method for forming the protection layer 8 and the lubricant layer 9 is already known, it will not be described here.

In making a comparison between the first method for forming a recording layer according to the present invention as explained with reference to FIGS. 2 to 5 and the second method for forming a recording layer according to the present invention explained with reference to FIGS. 6 to 9, the magnetic material layer 207 is formed so as to fill up the recessed portions of the pattern of the non-magnetic layer 107 in the first method, whereas the non-magnetic material layer 107 is formed so as to fill up the recessed portions of the pattern of the magnetic material layer 207 in the second method. However, the volume ratio of the non-magnetic material layer 107 to the magnetic material layer 207 in the recording layer formed by the second method is equal to the volume ratio of the non-magnetic material layer 107 to the magnetic material layer 207 in the recording layer formed by the first method. Therefore, the pattern of the magnetic material layer 207 comprising projecting and recessed portions used in the second method is in inverse relationship with the pattern of the non-magnetic material layer 107 comprising projecting and recessed portions used in the first method.

FIG 10 shows a second embodiment of the patterned recording medium of the present invention. In this embodiment, the base layer 106 is provided between the soft-magnetic layer 5 and the intermediate layer 6. The base layer 106 is made of for example a Ti alloy.

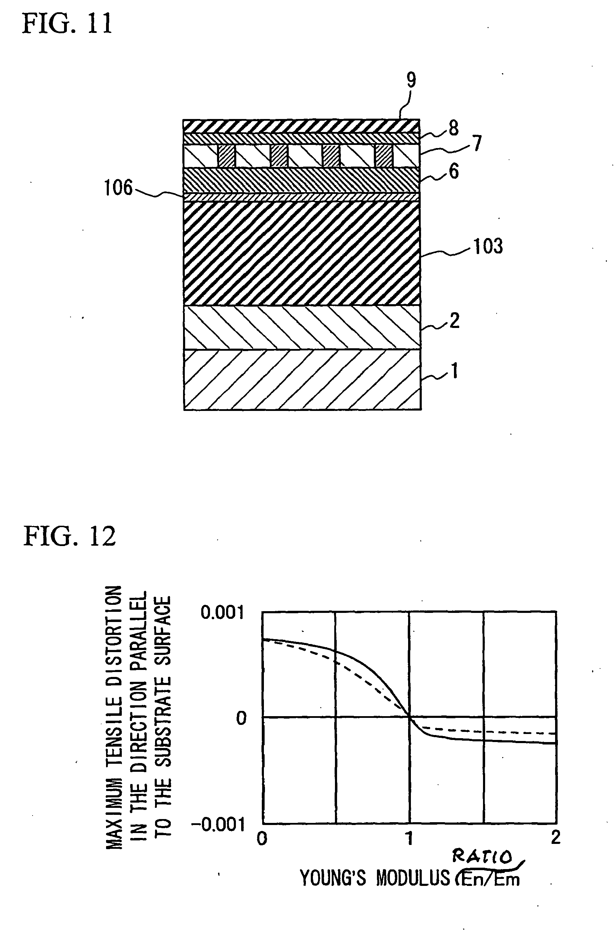

FIG. 11 shows a third embodiment of the patterned recording medium of the present invention. In this embodiment, the soft-magnetic layer 103 is provided instead of the soft-magnetic layer 3, the non-magnetic layer 4 and the soft-magnetic layer 5 in the first and second embodiments. In the patterned media of FIGS. 10 and 11, the pattern structure of the recording layer 7 is formed by the method mentioned above.

The present inventor has found out that deformation of the patterned recording medium in the surface direction when the magnetic head contacts with the patterned medium can be restrained in the case the Young's modulus of the non-magnetic material layer 107 is larger than the Young's modulus of the magnetic material layer 207 in the recording layer 7 of a patterned recording medium according to the present invention.

FIG. 12 shows results of calculation of a molecular kinetic simulation carried out by the present inventor. As the magnetic material layer 207, a material containing Co, Cr, and Pt with a Young's modulus of 284 GPa was used. The surface distortion of the recording layer was calculated with the Young's modulus of the non-magnetic material layer 107 changed. The distortion in the direction parallel to the substrate surface in the case the magnetic material layer 207 is pressed in the direction perpendicular to the substrate surface and the distortion in the direction perpendicular to the substrate surface was calculated as 0.003.

The ordinate denotes the distortion in the direction parallel to the substrate surface, a positive value representing pulling and a negative value representing compression. The abscissa denotes the ratio En/Em of the Young's modulus En of the non-magnetic material layer 107 to the Young's modulus Em of the magnetic material layer 207.

The solid line curve shows the calculation result in the case the volume ratio of the non-magnetic material layer 107 to the magnetic material layer 207 in the recording layer 7 is 1, and the broken line curve shows the result in the case the volume ratio of the non-magnetic material layer 107 to the magnetic material layer 207 in the recording layer 7 is 0.7. As is apparent form the comparison between the broken line curve and the solid line curve, the distortion amount is smaller in the case of the volume ratio of 0.7 of the non-magnetic material layer 107 to the magnetic material layer 207 than in the case of the volume ratio of 1.

The thickness of the magnetic material layer 207 and that of the non-magnetic material layer 107 are substantially the same. Therefore, the volume ratio of the non-magnetic material layer 107 to the magnetic material layer 207 is substantially equal to the area ratio of the non-magnetic material layer 107 to the magnetic material layer 207 in the pattern. Therefore, the shape or the design of the pattern may be produced so as to have an area ratio of the non-magnetic material layer 107 to the magnetic material layer 207 of 0,7.

It is the tensile distortion in the direction parallel to the substrate surface in the recording layer 7 that influences recording and reproduction of the patterned recording medium, and the compression distortion in the direction parallel to the substrate surface barely influences recording and reproduction. Therefore, only the tensile distortion in the direction parallel to the substrate surface in the recording layer 7 is discussed here. From FIG. 12, it is learned that tensile distortion is generated in the direction parallel to the substrate surface in the case En/Em < 1, with the value increased as the ratio En/Em becomes smaller. In the case En/Em > 1, tensile distortion is not generated in the direction parallel to the substrate surface. That is, compression distortion in the direction parallel to the substrate surface is generated, and the value is relatively small. Therefore, the Young's modulus En of the non-magnetic material layer 107 needs to be larger than the Young's modulus Em of the magnetic material layer 207.

In the conventional patterned media, as the non-magnetic material layer 107, a silicon oxide layer or an aluminum oxide layer is used. The Young's modulus of the silicon oxide layer is about 70 GPa. The Young's modulus of the aluminum oxide differs between the case of a bulk material and the case of a layer. In the case of a bulk material, it is 200 GPa or more, and in the case of a layer, due to the low atomic number density, it is about 30 GPa to 150 GPa. On the other hand, the Young's modulus of the magnetic material 207 is about 200 GPa or more. Therefore, since En/Em < 1, as shown in FIG 12, tensile distortion is generated in the direction parallel to the substrate surface. This causes errors at the time of reading and writing information.

Therefore, the present inventor has selected the magnetic material layer 207 and the non-magnetic material layer 107 so as to have En/Em > 1. As the magnetic material layer 207, a material having Co, Cr and Pt as the constituent elements is selected. The Cr concentration of the magnetic material layer 207 is 15 at% or more and 25 at% or less, and the Pt concentration is 10 at% or more and 20 at% or less. The Young's modulus of the magnetic material layer 207 is about 284 GPa.

It was found out that a material having W or Ta as the main constituent material is preferable as the non-magnetic material layer 107 for such a magnetic material layer 207. As such a constituent material, W, WN, WC, WB, WO, or TaN, TaC, TaB can be presented. The Young's modulus of such a non-magnetic material layer 107 is sufficiently larger than 284 GPa, the Young's modulus of the magnetic material layer 207. Therefore, since En/Em > 1, generation of the tensile distortion can be restrained in the direction parallel to the substrate surface.

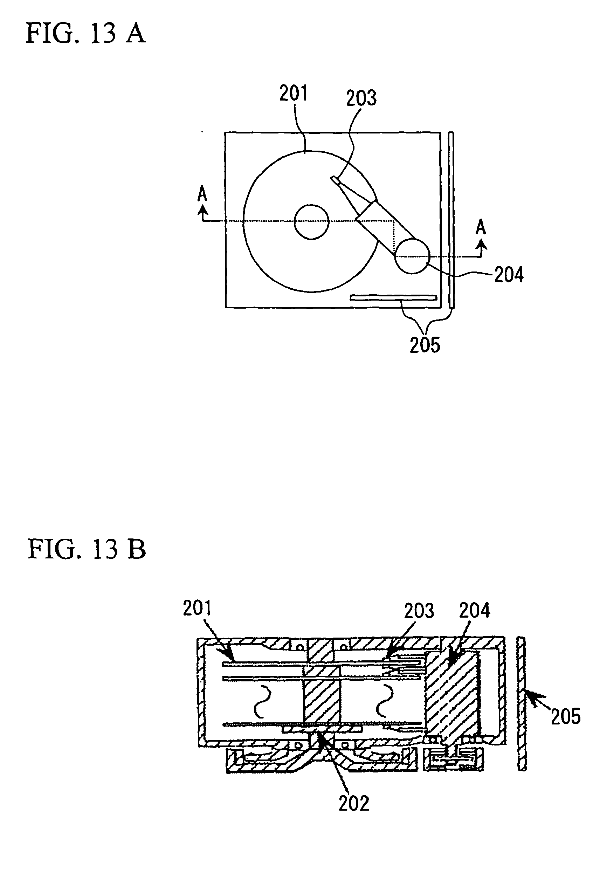

FIG 13 shows a hard disc device using a patterned recording medium of the present invention as the recording medium. FIG 13A shows the configuration of the hard disc device in plan view and FIG 13B shows the cross-sectional configuration along the line A - A of the hard disc device of FIG 13A. In FIG 13A, the top surface is eliminated.

The hard disc device of this embodiment has a plurality of patterned media 201, a driving part 202 for rotating the patterned media, a magnetic head 203, driving means 204 for the magnetic head 203, and a recording and reproduction signal processing means 205 for the magnetic head 203.

The patterned media 201 are the patterned media according to the present invention shown in FIGS. 1,10 and 11. Even in the case the magnetic head 203 comes into contact with the patterned media 201, tensile distortion is restrained in the direction parallel to the substrate surface in the recording layer. Therefore, even in the case the head lift amount (distance between the head and the protection layer) becomes 10 nm or less, the reliability of recording and reproduction is high.

Although embodiments of the present invention have been explained so far, the present invention is not limited to the above-mentioned embodiments, and it is easily understood by those skilled in the art that various modifications can be executed within the scope disclosed in the claims.

## Claims

1. Patterned recording medium, comprising:
- a soft-magnetic layer (3),
- a non-magnetic layer (4),
- an intermediate layer (6) and
- a recording layer (7) having a pattern structure of a non-magnetic material (107) and a magnetic material (207) formed successively on one principal plane side of a substrate (1),
**characterized in that**
- the Young's modulus En of the non-magnetic material (107) of the recording layer (7) is larger than the Young's modulus Em of the magnetic material (207) of the recording layer (7), and
- the non-magnetic material (107) contains one non-magnetic material selected from the group consisting of W, WN, WC, WB, WO, TaN, TaC and TaB as the main constituent material.

2. Recording medium according to claim 1, wherein the pattern structure of the recording layer (7) comprises recessed portions and projecting portions, and the recessed portions of the non-magnetic material (107) are filled up with the magnetic material (207).

3. Recording medium according to claim 1, wherein the pattern structure of the recording layer (7) comprises recessed portions and projecting portions, and the recessed portions of the magnetic material (207) are filled up with the non-magnetic material (107).

4. Recording medium according to any of claims 1 to 3, wherein the non-magnetic material (107) contains W as the main constituent material.

5. Recording medium according to any of claims 1 to 4, wherein the magnetic material (207) contains Co, Cr and Pt as the constituent elements, and the Cr concentration is 15 at% or more and 25 at% or less, and the Pt concentration is 10 at% or more and 20 at% or less.

6. Recording medium according to any of claims 1 to 5, wherein the soft magnetic layer (3) is made of an amorphous material, and the intermediate layer (6) contains Ru as the main constituent element.

7. Recording medium according to any of claim 1 to 6, wherein the intermediate layer (6) contains Ti as an additional element.

8. Method for producing a patterned recording medium, comprising the following steps:
- forming a soft-magnetic layer (3), a non-magnetic layer (4) and an intermediate layer (6) successively on one principal plane side of a substrate (1),
- forming a layer of a non-magnetic material (107) on the intermediate layer (6),
- forming a pattern comprising projecting and recessed portions of the non-magnetic material (107) by patterning the layer of the non-magnetic material (107), and
- forming a layer of a magnetic material (207) so as to fill up the recessed portions of the pattern of the non-magnetic material (107),
**characterized in that**
- the non-magnetic material (107) and the magnetic material (207) are selected such that the Young's modulus Eₙ of the non-magnetic material (107) is larger than the Young's modulus Eₘ of the magnetic material (207), and
- the non-magnetic material (107) contains one non-magnetic material selected from the group consisting of W, WN, WC, WB, WO, TaN, TaC and TaB as the main constituent material.

9. Method for producing a patterned recording medium, comprising the following steps:
- forming a soft-magnetic layer (3), a non-magnetic layer (4) and an intermediate layer (6) successively on one principal plane side of a substrate (1),
- forming a layer of a magnetic material (207) on the intermediate layer (6),
- forming a pattern comprising projecting and recessed portions of the magnetic material (207) by patterning the layer of the magnetic material (207), and
- forming a layer of a non-magnetic material (107) so as to fill up the recessed portions of the pattern of the magnetic material (207),
**characterized in that**
- the non-magnetic material (107) and the magnetic material (207) are selected such that the Young's modulus Eₙ of the non-magnetic material (107) is larger than the Young's modulus Eₘ of the magnetic material (207), and
- the non-magnetic material (107) contains one non-magnetic material selected from the group consisting of W, WN, WC, WB, WO, TaN, TaC and TaB as the main constituent material.

10. Method according to claim 8 or 9, wherein the non-magnetic material (107) contains W as the main constituent material.

11. Method according to claim 8 , wherein the layer of the non-magnetic material (107) and the layer of the magnetic material (207) are formed by a DC magnetron sputtering method.

12. Method according to claim 8, wherein the pattern of the non-magnetic material (107) is formed by a nano-imprint method.

13. Method according to claim 9 or 10, wherein the pattern of the magnetic material (207) is formed by a nano-imprint method.

14. Magnetic disc memory device comprising a patterned recording medium (201), a driving part (202) for rotating the patterned medium (201), a magnetic head (203) for recording and reproduction with respect to the patterned medium (201), driving means (204) for driving the magnetic head (203) and signal processing means (205) for processing recording and reproduction signals from the magnetic head (203),
**characterized in that** the patterned recording medium (201) is a recording medium according to any of claims 1 to 7.

## Patentansprüche

1. Mit einem Muster versehenes Aufzeichnungsmedium, das aufweist:
- eine weichmagnetische Schicht (3),
- eine nichtmagnetische Schicht (4),
- eine Zwischenschicht (6)
und
- eine Aufzeichnungsschicht (7) mit einer Musterstruktur aus einem nichtmagnetischen Material (107) und einem magnetischen Material (207),
die aufeinanderfolgend auf einer ebenen Hauptseite eines Substrats (1) ausgebildet sind,
**dadurch gekennzeichnet, dass**
- der Young-Modul Eₙ des nichtmagnetischen Materials (107) der Aufzeichnungsschicht (7) größer ist als der Young-Modul Eₘ des magnetischen Materials (207) der Aufzeichnungsschicht (7)
und
- das nichtmagnetische Material (107) ein nichtmagnetisches Material enthält, das aus der Gruppe ausgewählt ist, die besteht aus W, WN, WC, WB, WO, TaN, TaC und TaB, und welches das Hauptbestandteilsmaterial bildet.

2. Aufzeichnungsmedium nach Anspruch 1, bei dem die Musterstruktur der Aufzeichnungsschicht (7) tieferliegende und herausstehende Bereiche aufweist und die tieferliegenden Bereiche des nichtmagnetischen Materials (107) mit dem magnetischen Material (207) aufgefüllt sind.

3. Aufzeichnungsmedium nach Anspruch 1, bei dem die Musterstruktur der Aufzeichnungsschicht (7) tieferliegende und herausstehende Bereiche aufweist und die tieferliegenden Bereiche des magnetischen Materials (207) mit dem nichtmagnetischen Material (107) aufgefüllt sind.

4. Aufzeichnungsmedium nach einem oder mehreren der Ansprüche 1 bis 3, bei dem das nichtmagnetische Material (107) W als Hauptbestandteilsmaterial enthält.

5. Aufzeichnungsmedium nach einem oder mehreren der Ansprüche 1 bis 4, bei dem das magnetische Material (207) Co, Cr und Pt als Bestandteilselemente enthält und die Cr-Konzentration mindestens 15 At.-% und höchstens 25 At.-% und die Pt-Konzentration mindestens 10 At.-% und höchstens 20 At.-% betragen.

6. Aufzeichnungsmedium nach einem oder mehreren der Ansprüche 1 bis 5, bei dem die weichmagnetische Schicht (3) aus einem amorphen Material besteht und die Zwischenschicht (6) Ru als Hauptbestandteilselement enthält.

7. Aufzeichnungsmedium nach einem oder mehreren der Ansprüche 1 bis 6, bei dem die Zwischenschicht (6) Ti als zusätzliches Element enthält.

8. Verfahren zur Herstellung eines mit einem Muster versehenen Aufzeichnungsmediums, das folgende Schritte umfasst:
- aufeinanderfolgendes Erzeugen einer weichmagnetischen Schicht (3), einer nichtmagnetischen Schicht (4) und einer Zwischenschicht (6) auf einer ebenen Hauptseite eines Substrats (1),
- Erzeugen einer Schicht eines nichtmagnetischen Materials (107) auf der Zwischenschicht (6),
- Erzeugen eines Musters, das tieferliegende und herausstehende Bereiche aufweist, aus dem nichtmagnetischen Material (107) durch Versehen der Schicht des nichtmagnetischen Materials (107) mit einem Muster
und
- Erzeugen einer Schicht aus einem magnetischen Material (207) in der Weise, dass die tieferliegenden Bereiche des Musters aus dem nichtmagnetischen Material (107) aufgefüllt werden,
**dadurch gekennzeichnet, dass**
- das nichtmagnetische Material (107) und das magnetische Material (207) so ausgewählt werden, dass der Young-Modul Eₙ des nichtmagnetischen Materials (107) größer ist als der Young-Modul Eₘ des magnetischen Materials (207), und
- das nichtmagnetische Material (107) ein nichtmagnetisches Material enthält, das aus der Gruppe ausgewählt ist, die besteht aus W, WN, WC, WB, WO, TaN, TaC und TaB, und welches das Hauptbestandteilsmaterial bildet.

9. Verfahren zur Herstellung eines mit einem Muster versehenen Aufzeichnungsmediums, das folgende Schritte umfasst:
- aufeinanderfolgendes Erzeugen einer weichmagnetischen Schicht (3), einer nichtmagnetischen Schicht (4) und einer Zwischenschicht (6) auf einer ebenen Hauptseite eines Substrats (1),
- Erzeugen einer Schicht eines magnetischen Materials (207) auf der Zwischenschicht (6),
- Erzeugen eines Musters, das herausstehende und tieferliegende Bereiche aufweist, aus dem magnetischen Material (207) durch Versehen der Schicht des magnetischen Materials (207) mit einem Muster
und
- Erzeugen einer Schicht aus einem nichtmagnetischen Material (107) in der Weise, dass die tieferliegenden Bereiche des Musters aus dem magnetischen Material (207) aufgefüllt werden,
**dadurch gekennzeichnet, dass**
- das nichtmagnetische Material (107) und das magnetische Material (207) so ausgewählt werden, dass der Young-Modul Eₙ des nichtmagnetischen Materials (107) größer ist als der Young-Modul Eₘ des magnetischen Materials (207), und
- das nichtmagnetische Material (107) ein nichtmagnetisches Material enthält, das aus der Gruppe ausgewählt ist, die besteht aus W, WN, WC, WB, WO, TaN, TaC und TaB, und welches das Hauptbestandteilsmaterial bildet.

10. Verfahren nach Anspruch 8 oder 9, bei dem das nichtmagnetische Material (107) W als Hauptbestandteilsmaterial enthält.

11. Verfahren nach Anspruch 8, bei dem die Schicht des nichtmagnetischen Materials (107) und die Schicht des magnetischen Materials (207) durch ein DC-Magnetron-Sputterverfahren erzeugt werden.

12. Verfahren nach Anspruch 8, bei dem das Muster des nichtmagnetischen Materials (107) durch ein Nanodruckverfahren erzeugt wird.

13. Verfahren nach Anspruch 9 oder 10, bei dem das Muster des magnetischen Materials (207) durch ein Nanodruckverfahren erzeugt wird.

14. Magnetplatten-Speichervorrichtung, die aufweist:
ein mit einem Muster versehenes Aufzeichnungsmedium (201), einen Antriebsteil (202) zum Drehantrieb des mit einem Muster versehenen Mediums (201), einen Magnetkopf (203) zur Aufnahme und Wiedergabe in Bezug auf das mit einem Muster versehene Medium (201), eine Ansteuereinrichtung (204) zur Ansteuerung des Magnetkopfs (203) sowie eine Signalverarbeitungseinrichtung (205) zur Verarbeitung der Aufzeichnungs- und Wiedergabesignale vom Magnetkopf (203), **dadurch gekennzeichnet, dass** das mit einem Muster versehene Aufzeichnungsmedium (201) ein Aufzeichnungsmedium nach einem der Ansprüche 1 bis 7 ist.

## Revendications

1. Support d'enregistrement gravé, comprenant :
- une couche magnétique douce (3),
- une couche non magnétique (4),
- une couche intermédiaire (6)
et
- une couche d'enregistrement (7) ayant une structure gravée d'une matière non magnétique (107) et d'une matière magnétique (207)
formées successivement sur une face plane principale d'un substrat (1),
**caractérisé en ce que**
- le module de Young En de la matière non magnétique (107) de la couche d'enregistrement (7) est plus grand que le module de Young Eₘ de la matière magnétique (207) de la couche d'enregistrement (7),
et
- la matière non magnétique (107) contient une matière non magnétique choisie dans le groupe constitué par W, WN, WC, WB, WO, Tan, TaC et TaB comme matière constituante principale.

2. Support d'enregistrement selon la revendication 1, dans lequel la structure gravée de la couche d'enregistrement (7) comprend des parties en creux et des parties saillantes et les parties en creux de la matière non magnétique (107) sont remplies de matière magnétique (207).

3. Support d'enregistrement selon la revendication 1, dans lequel la structure gravée de la couche d'enregistrement (7) comprend des parties en creux et des parties saillantes et les parties en creux de la matière magnétique (207) sont remplies de matière non magnétique (107).

4. Support d'enregistrement selon l'une quelconque des revendications 1 à 3, dans lequel la matière non magnétique (107) contient du W comme matière constituante principale.

5. Support d'enregistrement selon l'une quelconque des revendications 1 à 4, dans lequel la matière magnétique (207) contient du Co, Cr et Pt comme éléments constituants, et la concentration en Cr est de 15 % atmosphérique ou plus et de 25 % atmosphérique ou moins, et la concentration en Pt est de 10 % atmosphérique ou plus et de 20 % atmosphérique ou moins.

6. Support d'enregistrement selon l'une quelconque des revendications 1 à 5, dans lequel la couche magnétique douce (3) est constituée d'une matière amorphe et la couche intermédiaire (6) contient du Ru comme élément constituant principal.

7. Support d'enregistrement selon l'une quelconque des revendications 1 à 6, dans lequel la couche intermédiaire (6) contient du Ti comme élément additionnel.

8. Procédé de production d'un support d'enregistrement gravé, comprenant les étapes suivantes consistant à :
- former une couche magnétique douce (3), une couche non magnétique (4) et une couche intermédiaire (6) successivement sur une face plane principale d'un substrat (1),
- former une couche de matière non magnétique (107) sur la couche intermédiaire (6),
- former une structure gravée comprenant des parties saillantes et des parties en creux de matière non magnétique (107) par gravure de la couche de matière non magnétique (107),
et
- former une couche de matière magnétique (207) de manière à ce qu'elle remplisse les parties en creux de la structure gravée de matière non magnétique (107),
**caractérisé en ce que**
- la matière non magnétique (107) et la matière magnétique (207) sont sélectionnées de manière à ce que le module de Young En de la matière non magnétique (107) soit plus grand que le module de Young Eₘ de la matière magnétique (207),
et
- la matière non magnétique (107) contient une matière non magnétique choisie dans le groupe constitué par W, WN, WC, WB, WO, Tan, TaC et TaB comme matière constituante principale.

9. Procédé de production d'un support d'enregistrement gravé, comprenant les étapes suivantes consistant à :
- former une couche magnétique douce (3), une couche non magnétique (4) et une couche intermédiaire (6) successivement sur une face plane principale d'un substrat (1),
- former une couche de matière magnétique (207) sur la couche intermédiaire (6),
- former une structure gravée comprenant des parties saillantes et des parties en creux de matière magnétique (207) par gravure de la couche de matière magnétique (207),
et
- former une couche de matière non magnétique (107) de manière à ce qu'elle remplisse les parties en creux de la structure gravée de matière magnétique (207),
**caractérisé en ce que**
- la matière non magnétique (107) et la matière magnétique (207) sont sélectionnées de manière à ce que le module de Young En de la matière non magnétique (107) soit plus grand que le module de Young Eₘ de la matière magnétique (207), et
- la matière non magnétique (107) contient une matière non magnétique choisie dans le groupe constitué par W, WN, WC, WB, WO, Tan, TaC et TaB comme matière constituante principale.

10. Procédé selon la revendication 8 ou 9, dans lequel la matière non magnétique (107) contient du W comme matière constituante principale.

11. Procédé selon la revendication 8, dans lequel la couche de matière non magnétique (107) et la couche de matière magnétique (207) sont formées par un procédé de pulvérisation magnétron DC.

12. Procédé selon la revendication 8, dans lequel la structure gravée de matière non magnétique (107) est formée par un procédé de nano-impression.

13. Procédé selon la revendication 9 ou 10, dans lequel la structure gravée de matière magnétique (207) est formée par un procédé de nano-impression.

14. Dispositif à mémoire de disque magnétique comprenant un support d'enregistrement gravé (201), une partie entraînement (202) pour faire tourner le support gravé (201), une tête magnétique (203) pour l'enregistrement et la reproduction du contenu du support gravé (201), des moyens de commande (204) pour commander la tête magnétique (203) et des moyens de traitement des signaux (205) pour traiter les signaux d'enregistrement et de reproduction provenant de la tête magnétique (203),
**caractérisé en ce que** le support d'enregistrement gravé (201) est un support d'enregistrement selon l'une quelconque des revendications 1 à 7.
